# EUROPÄISCHE PATENTSCHRIFT

(11) **EP 2 623 349 B1**
(45) Veröffentlichungstag und Bekanntmachung des Hinweises auf die Patenterteilung: **05.06.2019**
(21) Anmeldenummer: 13152638.6
(22) Anmeldetag: 25.01.2013
(51) Int. Cl.: B60J 1/18, B60J 10/90

(54) **Dichtung für bewegliche Heckscheibe im Stoffverdeck**
Seal for the moveable rear window in a soft top
Joint pour lunette arrière mobile dans une capote textile

(30) Priorität: 03.02.2012 DE 102012100910
(43) Veröffentlichungstag der Anmeldung: 07.08.2013
(73) Patentinhaber: Magna Car Top Systems GmbH, 74321 Bietigheim-Bissingen (DE)
(72) Erfinder: Anders, Jens, 31094 Marienhagen (DE); Fischer, Thomas, 72074 Tübingen (DE); Jenckel, Sabrina, 74321 Bietigheim-Bissingen (DE)
(74) Vertreter: Völger, Silke Beatrix

(56) Entgegenhaltungen:
- EP-A1- 1 818 203
- DE-A1- 19 518 658
- DE-A1-102009 018 295
- US-A- 4 930 835

## Beschreibung

Die vorliegende Erfindung betrifft ein Verdeck für Kraftfahrzeuge wie Cabriolets oder dergleichen, das zwischen einer Offenstellung und einer Schließstellung verstellbar ist, mit einem äußeren Verdeckbezug und mindestens einer in einem Ausschnitt des Verdeckbezug angeordneten Scheibe, die mit dem äußeren Verdeckstoff mittels zumindest eines Dichtelementes mechanisch fest und dicht verbunden, der Rand des Ausschnittes im äußeren Verdeckbezug und der Rand der Scheibe von Dichtelementabschnitten eingefasst sind, wobei zumindest zwei Dichtlippen vorhanden sind.

Aus der DE19909139 ist ein Klappverdeck für Kraftfahrzeuge bekannt, bei dem der Ausschnittrand des äußeren Verdeckbezug einerseits und der Rand der Scheibe andererseits von jeweils einem eigenen, einen Rahmen bildenden Wulstelement eingefasst sind, über die sie passgenau miteinander kuppelbar sind, und wobei die beiden Wulstelemente mittels lösbarer Verbindungsmittel zusammengehalten werden.

Nachteilig bei dieser Lösung ist, dass die Scheibe nicht, relativ zum Stoffverdeck, beweglich ist, wodurch beim Ablegen des Stoffverdecks, nach dem Öffnen des Verdecks, ein größerer Platzbedarf benötigt wird. Ein weiterer Nachteil dieser Erfindung ist, dass eine Anpresskraft zum Abdichten der Scheibe gegen den Verdeckbezug über eigens gebildete Fügeflächen durch beispielsweise Schrauben erfolgt.

Die EP 1 818 203 A1 offenbart ein Dichtungselement für eine rahmenlose, bewegbare Sichtscheibe in einem Kraftfahrzeug, mit zwei separaten, an einem zentralen Dichtungskörper angeordneten und einander zugewandten Dichtlippen, die einen Dichtungsaufnahmeraum zur Aufnahme einer Stirnkante der Sichtscheibe in der Weise begrenzen, dass bei eingeführter Sichtscheibe die Dichtlippen an den Seitenwänden der Sichtscheibe anliegen, wobei eine Dichtlippe bei eingeführter Sichtscheibe die Stirnkante der Sichtscheibe übergreift.

Aus der DE 195 18 658 A1 ist eine Anordnung zur Befestigung einer Fensterscheibe in einem flexiblen Spannverdeck, insbesondere für ein Heckfenster im Faltverdeck eines Cabriolets, bekannt, mit einem entlang der Außenkante der Fensterscheibe im Wesentlichen umlaufend befestigten ersten Verbindungsprofilstrang und einem im Bereich der die Fensteröffnung umgrenzenden Kante des Verdecks befestigten zweiten Verbindungsprofilstrang.

Die vorliegende Erfindung beschäftigt sich mit dem Problem, für ein Verdeck bzw. für ein damit ausgestattetes Fahrzeug bzw. für eine zugehörige Dichtung eine verbesserte Ausführungsform anzugeben, die sich insbesondere durch eine einfache Montage auszeichnet und gleichzeitig eine effektive Dichtungswirkung realisiert, wobei zum Abdichten der Scheibe gegen den Verdeckbezug aufgrund der Anordnung der Dichtlippen geringe Anpresskräfte benötigt werden. Die bewegliche Scheibe ist in einem dafür ausgebildeten Scheibenrahmen, der als Strangpressprofil, als Rollprofil oder als Schweißprofil. Als Werkstoff können in geeigneter Weise Aluminium, Stahl oder auch Kunststoff verwendet werden. Die Scheibe wird dabei vorzugsweise in den Rahmen geklebt, es ist jedoch auch eine andere Befestigungsmöglichkeit denkbar. Der Scheibenrahmen ist über eine Dachkinematik mit der Karosserie verbunden.

Erfindungsgemäß wird dieses Problem durch die Merkmale des Anspruchs 1 gelöst. Vorteilhafte Ausführungsformen sind Gegenstand der abhängigen Ansprüche.

Erfindungsgemäß ist ein äußerer Verdeckbezug und zumindest eine im Ausschnitt desselben angeordnete Scheibe, die mit dem äußeren Verdeckstoff mittels wenigstens eines Dichtelementes mechanisch fest und dicht verbunden ist, der Rand des Ausschnittes im äußeren Verdeckbezug und der Rand der Scheibe von Dichtelementabschnitten eingefasst sind, wobei zumindest zwei Dichtlippen vorhanden sind, und wobei das innere Dichtelement der Scheibe und das äußere Dichtelement dem äußeren Verdeckbezug angeordnet ist, wobei weitere Dichtelemente gegen eine Halteleiste des Verdecks abdichten.

Erfindungsgemäß umfasst die Halteleiste ein Dichtelement welches zumindest eine Dichtlippe aufweist. Die Halteleiste kann dabei als Duplexprofil bzw. als Monoprofil ausgeführt sein. Die Halteleiste wird durch Kleben oder Nähen im Verdeckbezug befestigt. Es versteht sich erfindungsgemäß von selbst, dass auch eine jede andere bekannte Verbindungsmöglichkeit verwendet werden kann.

Gemäß der Erfindung ist zumindest eine Dichtlippe der Halteleiste, die sich gegen das Dichtelement der Scheibe abdichtet. Das Dichtelement der Scheibe ist im Scheibenrahmen untergebracht, wobei sich das Dichtelement Scheibe im Scheibenrahmen aufgrund der konstruktiven Ausführung gegen den Boden des Scheibenrahmens sowie über eine Nut seitlich im Dichtungskörper gegen eine Rippe, und einen Fortsatz an der anderen Seite des Dichtungskörpers gegen eine Einkragung des Scheibenrahmens abstützt.

Gemäß einer Ausführungsform der Erfindung weisen die Dichtelemente eine labyrinthartige Anordnung der Dichtlinien auf. Dadurch ist eine geringere Anpresskraft zum Abdichten erforderlich. Aufgrund der Anordnung der Dichtlippen ist auch ein in den USA durchgeführte Hochdruckwaschanlagentest wesentlich leichter erfüllbar.

Erfindungsgemäß wird durch die Dichtelemente ein U-förmiger Kanal gebildet. Dieser U-förmige Kanal hat die Aufgabe, das eventuell eingetretene Wasser abzuleiten. Das Wasser kann dabei innen über einen Schlauch, über einen eigens ausgeführten Wassersack, oder direkt nach außen abgeleitet werden.

Die Erfindung wird im Folgenden beispielhaft unter Bezugnahme auf die Zeichnung beschrieben.

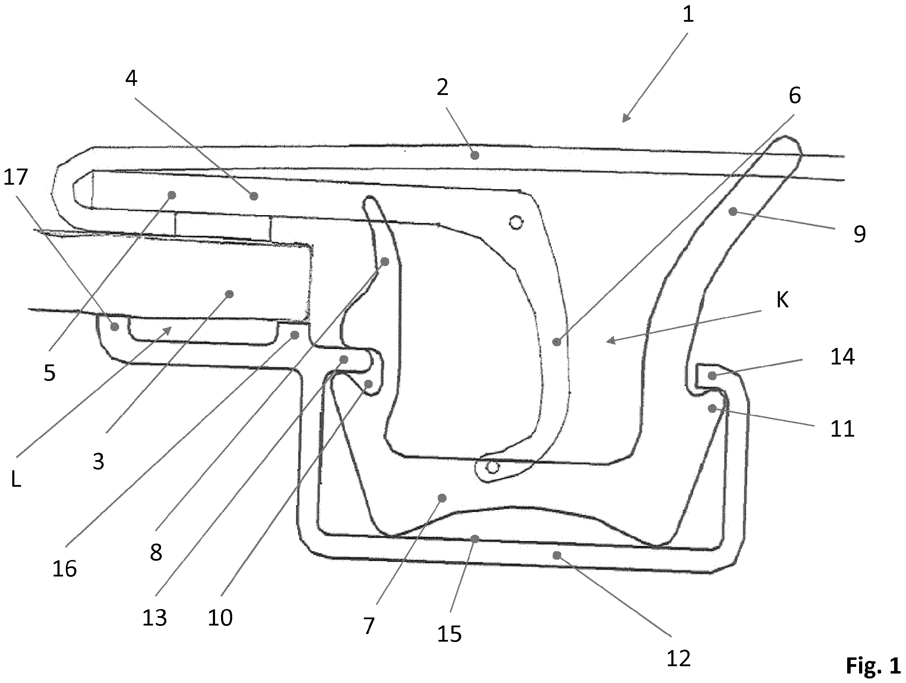

- Fig. 1: zeigt ein Detail einer Schnittansicht einer Dichtung einer beweglichen Heckscheibe

In Fig. 1 ist eine erfindungsgemäße Dichtungsanordnung dargestellt, wobei das Verdeck 1 einen Verdeckbezug 2 und ein Dichtelement Verdeckbezug 4 aufweist. Das Dichtelement Verdeckbezug 4 besteht aus einer Halteleiste 5 und einer Dichtlippe Halteleiste 6. Die Halteleiste 5 kann hierbei als Monoprofil oder als Duplexprofil ausgebildet sein. Das Dichtelement Verdeckbezug 4 weist eine Dichtlippe Halteleiste 6 auf, welche gegen ein Dichtelement Scheibe 7 abdichtet. Das Dichtelement Scheibe 7 weist dabei eine innere Dichtlippe 8 und eine äußere Dichtlippe 9 auf, die gegen die Halteleiste 5 bzw. den Verdeckbezug 2 abdichten. Das Dichtelement Scheibe 7 weist weiters eine Nut 10 auf, die sich gegen eine Rippe 13 eines Scheibenrahmens 12 abstützt und einen Fortsatz 11, welcher sich gegen eine Einkragung 14 des Scheibenrahmens 12 abstützt. Im unteren Bereich stützt sich das Dichtelement Scheibe 7 gegen den Boden 15 des Scheibenrahmens 12 ab. Der Scheibenrahmen 12 weist eine erste Auflage Scheibe 16 und eine zweite Auflage Scheibe 17 auf. Die Auflagen 16 und 17 des Scheibenrahmens 12 bilden gemeinsam mit einer Scheibe 3 einen Hohlraum, der den Klebebereich Scheibe L definiert. Die Dichtlippe Halteleiste 6 und die äußere Dichtlippe 9 des Dichtelements Scheibe 7 bilden einen U-förmigen Kanal K.

## Patentansprüche

1. Verdeck (1) für Kraftfahrzeuge, wie Cabriolets oder dergleichen, das zwischen einer Offenstellung und einer Schließstellung verstellbar ist, mit einem äußeren Verdeckbezug (2) und zumindest einer in einem Ausschnitt desselben angeordneten Scheibe (3), die mit dem äußeren Verdeckstoff mittels wenigstens eines Dichtelementes mechanisch fest und dicht verbunden ist, der Rand des Ausschnittes im äußeren Verdeckbezug (2) und der Rand der Scheibe (3) von Dichtelementabschnitten eingefasst sind, wobei zumindest zwei Dichtlippen vorhanden sind, und wobei ein innere Dichtelement der Scheibe (7) und ein äußere Dichtelement dem äußeren Verdeckbezug (4) zugeordnet ist wobei weitere Dichtelemente gegen eine Halteleiste (5) des Verdecks abdichten, wobei die Halteleiste (5) ein Dichtelement ist, welches zumindest eine Dichtlippe (6) aufweist, wobei die zumindest eine Dichtlippe (6) der Halteleiste (5) gegen das innere Dichtelement der Scheibe (7) abdichtet, **dadurch gekennzeichnet, dass** das innere Dichtelement der Scheibe (7) eine innere Dichtlippe (8) und eine äußere Dichtlippe (9) aufweist, wobei die innere Dichtlippe (8) gegen die Halteleiste (5) und die äußere Dichtlippe (9) gegen den Verdeckbezug (2) abdichten, wobei die Dichtlippe der Halteleiste (6) und die äußere Dichtlippe (9) des inneren Dichtelements der Scheibe (7) einen U-förmigen Kanal (K) bilden.

2. Verdeck (1) nach Anspruch 1, **dadurch gekennzeichnet, dass** die Dichtelemente eine labyrinthartige Anordnung der Dichtlinien aufweisen.

## Claims

1. Soft top (1) for motor vehicles such as convertibles or the like, said soft top (1) being adjustable between an open position and a closed position, having an outer soft top cover (2) and at least one glass (3) which is disposed in a cut-out of said outer soft top cover (2) and which by means of at least one sealing element is connected in a mechanically fixed and tight manner to the outer soft top material (2), the periphery of the cut-out in the outer soft top cover (2) and the periphery of the glass (3) being framed by sealing-element portions, wherein at least two seal lips are present, and wherein an internal sealing element of the glass (7) and an external sealing element are assigned to the outer soft top cover (4), wherein further sealing elements seal in relation to a holding strip (5) of the soft top, wherein the holding strip (5) is a sealing element which has at least one seal lip (6), wherein the at least one seal lip of the holding strip (6) seals in relation to the internal sealing element of the glass (7),
**characterized in that**
the internal sealing element of the glass (7) has an internal seal lip (8) and an external seal lip (9), wherein the internal seal lip (8) seals in relation to the holding strip (5) and the external seal lip (9) seals in relation to the soft top cover (2), wherein the seal lip of the holding strip (6) and the external seal lip (9) of the internal seal element of the glass (7) form a U-shaped duct (K).

2. Soft top (1) according to Claim 1,
**characterized in that**
the sealing elements have a labyrinth-type arrangement of the sealing lines.

## Revendications

1. Capote (1) pour véhicules automobiles, tels qu'un cabriolet ou similaire, qui peut être déplacée entre une position ouverte et une position fermée, la capote comprenant un revêtement extérieur (2) et au moins une vitre (3) qui est disposée dans une découpe de ladite capote et qui est reliée mécaniquement de manière fixe et étanche au tissu de revêtement extérieur au moyen d'au moins un élément d'étanchéité, le bord de la découpe dans le revêtement de capote extérieur (2) et le bord de la vitre (3) étant bordés par des parties d'élément d'étanchéité, au moins deux lèvres d'étanchéité étant présentes, et un élément d'étanchéité intérieur de la vitre (7) et un élément d'étanchéité extérieur étant associés au revêtement de capote extérieur (4), d'autres éléments d'étanchéité assurant l'étanchéité par rapport à une baguette de retenue (5) de la capote, la baguette de retenue (5) étant un élément d'étanchéité qui comporte au moins une lèvre d'étanchéité (6), l'au moins une lèvre d'étanchéité (6) de la baguette de retenue (5) assurant l'étanchéité par rapport à l'élément d'étanchéité intérieur de la vitre (7),
**caractérisée en ce que**
l'élément d'étanchéité intérieur de la vitre (7) comporte une lèvre d'étanchéité intérieure (8) et une lèvre d'étanchéité extérieure (9), la lèvre d'étanchéité intérieure (8) assurant l'étanchéité par rapport à la baguette de retenue (5) et la lèvre d'étanchéité extérieure (9) assurant l'étanchéité par rapport au revêtement de capote (2), la lèvre d'étanchéité de la baguette de retenue (6) et la lèvre d'étanchéité extérieure (9) de l'élément d'étanchéité intérieur de la vitre (7) formant un canal (K) en forme de U.

2. Capote (1) selon la revendication 1, **caractérisée en ce que** les éléments d'étanchéité présentent une disposition labyrinthique des lignes d'étanchéité.
